# EUROPÄISCHE PATENTANMELDUNG

(11) **EP 2 105 190 A1**
(43) Veröffentlichungstag der Anmeldung: **30.09.2009**
(21) Anmeldenummer: 08005849.8
(22) Anmeldetag: 27.03.2008
(51) Int. Cl.: B01D 53/14, B01D 53/62, C01B 31/20

(54) **Verfahren und Vorrichtung zum Abtrennen von Kohlendioxid aus einem Abgas einer fossilbefeuerten Kraftwerksanlage**

(71) Anmelder: SIEMENS AKTIENGESELLSCHAFT, 80333 München (DE)
(72) Erfinder: Rost, Mike, 91058 Erlangen (DE); Schneider, Rüdiger, Dr., 65817 Eppstein (DE); Schramm, Henning, Dr., 60598 Frankfurt (DE)

(57) **Zusammenfassung**

Die Erfindung betrifft ein Verfahren zum Abtrennen von Kohlendioxid aus einem Abgas einer fossilbefeuerten Kraftwerksanlage, bei dem in einem Verbrennungsprozess (1) ein fossiler Brennstoff verbrannt wird, wobei ein kohlendioxidhaltiges Abgas (2) erzeugt wird, in einem Vorreinigungsschritt (3) mit wenigstens einem ersten Absorptionsprozess (4) das kohlendioxidhaltige Abgas (2) mit einem ersten Absorptionsmedium in Kontakt gebracht wird, wobei Kohlendioxid von dem Absorptionsmedium aufgenommen wird, wobei ein erstes beladenes Absorptionsmedium (5) und ein vorgereinigtes Abgas (6) gebildet wird, das teilweise von Kohlendioxid befreit ist, und in einem Endreinigungsschritt (3') mit einem zweiten Absorptionsprozess (4') das im Vorreinigungsschritt (3) vorgereinigte Abgas (6) mit einem zweiten Absorptionsmedium in Kontakt gebracht wird, wobei Kohlendioxid von dem Absorptionsmedium aufgenommen wird, wobei ein zweites beladenes Absorptionsmedium (5') und ein gereinigtes Abgas (7) gebildet wird, das von Kohlendioxid weitgehend befreit ist.

## Beschreibung

Die Erfindung betrifft ein Verfahren zum Betreiben einer fossilbefeuerten Kraftwerksanlage und insbesondere ein Verfahren zum Abtrennen von Kohlendioxid aus einem Abgas einer fossilbefeuerten Kraftwerksanlage. Die Erfindung betrifft außerdem eine fossilbefeuerte Kraftwerksanlage mit einer Abscheidevorrichtung zum Abtrennen von Kohlendioxid aus einem Abgas.

Bei fossilbefeuerten Kraftwerksanlagen zur Erzeugung elektrischer Energie in großtechnischem Maßstab entsteht durch die Verbrennung eines fossilen Brennstoffes ein kohlendioxidhaltiges Abgas. Neben Kohlendioxid enthält das Abgas weitere Verbrennungsprodukte wie z.B. die Gase Stickstoff, Schwefeldioxid, Stickstoffoxid und Wasserdampf sowie Festkörperpartikel Stäube und Ruß. Das Abgas wird nach einer weitgehenden Abscheidung der Festkörperbestandteile in die Atmosphäre entlassen. Das sich in der Atmosphäre ansammelnde Kohlendioxid behindert die Wärmeabstrahlung unserer Erde und begünstigt durch den so genannten Treibhauseffekt eine Erhöhung der Erdoberflächentemperatur. Um eine Reduzierung der Kohlendioxid-Emission bei fossilbefeuerten Kraftwerksanlagen zu erreichen, kann Kohlendioxid aus dem Abgas abgetrennt werden.

Zur Abtrennung von Kohlendioxid aus einem Gasgemisch sind insbesondere aus der chemischen Industrie verschiedene Methoden bekannt. Insbesondere zum Abtrennen von Kohlendioxid aus einem Abgas nach einem Verbrennungsprozess (Post-combustion CO₂ separation) ist die Methode der Absorption-Desorption' oder der ,Tieftemperaturabscheidung (Cryogenic)' bekannt.

In großtechnischem Maßstab wird das beschriebene Abtrennen von Kohlendioxid mit dem Absorptions-Desorptionsverfahren mit einem Waschmittel durchgeführt. In einem klassischen Absorptions-Desorptions-Prozess wird das Abgas in einer Absorptionskolonne mit einem selektiven Lösungsmittel als Waschmittel in Kontakt gebracht. Dabei erfolgt die Aufnahme von Kohlendioxid durch einen chemischen oder physikalischen Prozess. Das gereinigte Abgas wird für eine weitere Verarbeitung oder Austragung aus der Absorptionskolonne ausgelassen. Das mit Kohlendioxid beladene Lösungsmittel wird zur Abtrennung des Kohlendioxids und Regenerierung des Lösungsmittels in eine Desorptionskolonne geleitet. Die Abtrennung in der Desorptionskolonne kann thermisch erfolgen. Dabei wird aus dem beladenen Lösungsmittel ein Gas- Dampfgemisch aus gasförmigem Kohlendioxid und verdampften Lösungsmittel ausgetrieben. Das verdampfte Lösungsmittel wird anschließend von dem gasförmigen Kohlendioxid separiert. Das Kohlendioxid kann nun in mehreren Stufen verdichtet, gekühlt und verflüssigt werden. In flüssigem oder gefrorenem Zustand kann das Kohlendioxid dann einer Lagerung oder Verwertung zugeführt werden. Das regenerierte Lösungsmittel wird zur Absorberkolonne zurück geleitet, wo es wieder Kohlendioxid aus dem kohlendioxidhaltigen Abgas aufnehmen kann.

Das Hauptproblem bei den existierenden Verfahren zum Abtrennen von Kohlendioxid aus einem Gasgemisch ist insbesondere der sehr hohe Energieaufwand, der in Form von Heizenergie für die Desorption benötigt wird. Um diesem Problem entgegen zu wirken, sind aus dem Stand der Technik eine Reihe von Vorschlägen bekannt.

So beschreibt die Die DE 299 24 190 U1 die Zusammenführung von Lösungsmitteln unterschiedlicher Regenerieungsgrade und Rückführung in den Absorber. Dazu weist die vorgeschlagene Wiederaufbereitungsanlage zur Wiedergewinnung einer gasförmigen Komponente aus einem Prozessgas einen Absorber auf, der ein dünnes Lösungsmittel und ein halbdünnes Lösungsmittel benutzt, welche die gasförmige Komponente aus dem Prozessgas absorbiert, wodurch ein angereichertes Lösungsmittel, ein halb angereichertes Lösungsmittel und dünnes Prozessgas erzeugt wird. Ein Regenerator ist an den Absorber gekuppelt, worin der Regenerator die gasförmige Komponente aus dem angereicherten Lösungsmittel entfernt, wodurch das dünne Lösungsmittel und das halbdünne Lösungsmittel wiedergewonnen werden. Ein Element für Kontrolle des Lösungsmittelflusses ist an den Absorber gekoppelt und kombiniert mindestens einen Teil des halb angereicherten Lösungsmittels mit zumindest einem Teil des halbdünnen Lösungsmittels, um ein Gemischtes Lösungsmittel zu bilden. Ein Kühler ist an den Absorber gekoppelt, der das gemischte Lösungsmittel kühlt. Das gekühlte Lösungsmittel wird anschließend durch ein verbindendes Element in den Absorber geführt. Durch diesen Prozess soll Energie zum regenerieren des Lösungsmittels eingespart werden können. Jedoch ist bei Integration der vorgeschlagenen Wiederaufbereitungsanlage in eine fossilbefeuerte Kraftwerksanlage, lediglich mit einer relativ geringen Verbesserung der Effizienz der Kraftwerksanlage zu rechnen, da die Wärmeenergie zum Betreiben des Regenerators nach wie vor aus dem Heißdampf des Kraftwerksprozesses entnommen werden muss, was den Wirkungsgrad der Kraftwerksanlage signifikant schmälert.

Genereller Nachteil an bekannt Abtrennverfahren für Kohlendioxid aus einem Abgas, die in oder nach einen Kraftwerksprozess geschaltet sind, ist insbesondere der signifikante Wirkungsgrad verschlechternde Einfluss der Abtrennverfahren auf den Kraftwerksprozess. Zu dieser Wirkungsgradverschlechterung kommt es, da die Energie zur Durchführung des Abtrennverfahrens aus dem Kraftwerksprozess entnommen werden muss. Die Wirtschaftlichkeit einer fossilbefeuerten Kraftwerksanlage mit Kohlendioxidabtrennungsvorrichtung, die in oder nach die fossilbefeuerte Kraftwerksanlage geschaltet ist, ist daher deutlich geringer als ohne.

Eine Aufgabe der Erfindung besteht darin, ein Verfahren zum Abtrennen von Kohlendioxid aus einem Abgas einer fossilbefeuerten Kraftwerksanlage vorzuschlagen, das eine hohe Abscheideeffizienz bei zugleich günstigem Gesamtanlagenwirkungsgrad des Kraftwerksprozesses ermöglicht.

Eine weitere Aufgabe der Erfindung ist es, eine fossilbefeuerte Kraftwerksanlage mit integrierter Abscheidevorrichtung für Kohlendioxid vorzuschlagen, welche eine hohe Abscheideeffizienz bei zugleich günstigem Gesamtwirkungsgrad der Kraftwerksanlage ermöglicht.

Die auf ein Verfahren gerichtete Aufgabe ist erfindungsgemäß gelöst mit einem Verfahren zum Abtrennen von Kohlendioxid aus einem Abgas einer fossilbefeuerten Kraftwerksanlage, bei dem in einem Verbrennungsprozess ein fossiler Brennstoff verbrannt wird, wobei ein kohlendioxidhaltiges Abgas erzeugt wird, bei dem in einem Vorreinigungsschritt mit wenigstens einem ersten Absorptionsprozess das kohlendioxidhaltige Abgas mit einem ersten Absorptionsmedium in Kontakt gebracht wird, wobei Kohlendioxid von dem Absorptionsmedium aufgenommen wird, wobei ein erstes beladenes Absorptionsmedium und ein vorgereinigtes Abgas gebildet wird, das teilweise von Kohlendioxid befreit ist, und bei dem in einem Endreinigungsschritt mit einem zweiten Absorptionsprozess das im Vorreinigungsschritt vorgereinigte Abgas mit einem zweiten Absorptionsmedium in Kontakt gebracht wird, wobei Kohlendioxid von dem Absorptionsmedium aufgenommen wird, wobei ein zweites beladenes Absorptionsmedium und ein gereinigtes Abgas gebildet wird, das von Kohlendioxid weitgehend befreit ist.

Die Erfindung geht dabei von der Überlegung aus, dass in einem Verbrennungsprozess durch die Verbrennung eines fossilen Brennstoffs ein kohlendioxidhaltiges Abgas erzeugt wird, welches in wenigstens zwei Reinigungsschritten in einem dem Verbrennungsprozess nachgeschalteten Absorptionsprozess von Kohlendioxid befreit wird. Als fossiler Brennstoff sind dabei Gase wie z.B. Erdas (Methan, Ethan, Propan, Butan, Ethen), Feststoffe wie z.B. Braun- oder Steinkohle und Flüssigkeiten wie z.B. Erdöl denkbar.

In dem ersten Reinigungsschritt, dem Vorreinigungsschritt, mit wenigstens einem ersten Absorptionsprozess, erfolgt zunächst eine Vorreinigung des kohlendioxidhaltigen Abgases.

Dabei wird das kohlendioxidhaltige Abgas mit wenigstens dem ersten Absorptionsmedium in Kontakt gebracht, wobei Kohlendioxid von dem Absorptionsmedium aufgenommen wird. Dadurch werden ein erstes beladenes Absorptionsmedium und ein vorgereinigtes Abgas gebildet. Das vorgereinigte Abgas ist dabei zunächst teilweise von Kohlendioxid befreit. In dem zweiten Reinigungsschritt, dem Endreinigungsschritt, mit einem zweiten Absorptionsprozess, erfolgt die Endreinigung des in wenigstens dem ersten Reinigungsschritt vorgereinigten kohledioxidhaltigen Abgases. Dazu wird das vorgereinigte kohlendioxidhaltige Abgas in dem zweiten Absorptionsprozess mit dem zweiten Absorptionsmedium in Kontakt gebracht, wobei Kohlendioxid von dem Absorptionsmedium aufgenommen wird. Den zweiten Absorptionsprozess verlassen ein beladenes Absorptionsmedium und ein weitgehend von Kohlendioxid befreites Abgas. Das beladene Absorptionsmedium aus dem ersten und dem zweiten Reinigungsschritt sowie das weitgehend von Kohlendioxid befreites Abgas kann nun einer weiteren Verwendung zugeführt werden.

Die Erfindung sieht dabei zunächst einen Vorreinigungsschritt mit wenigstens einem ersten Absorptionsprozess vor. Je nach Ausgestaltung des Prozesses kann aber auch das Vorhandensein von einem zweiten ersten oder mehreren ersten Absorptionsprozessen von Vorteil sein.

Durch eine mehrstufige Reinigung ist eine Anpassung der jeweiligen Stufe des Absorptionsprozesses auf den Kohlendioxidgehalt im Abgas erreichbar. Dabei wird das Kohlendioxidhaltige Abgas zunächst einem Vorreinigungsschritt und anschließend einem Endreinigungsschritt unterworfen. Dadurch ist ein deutlich effizienterer Betrieb einer Kohlendioxid-Abscheideeinrichtung, insbesondere bei einer Kraftwerksanlage möglich, die gegenüber einer herkömmlichen Betriebsweise im Energiebedarf reduziert ist.

Die jeweiligen Absorptionsprozesse aus Vor- und Endreinigung sind dabei prozesstechnisch von einander getrennt. Eine Durchführung dieser mehrstufigen Reinigung - Vorreinigung und Endreinigung - des Abgases in einem einzigen Gehäuse ist möglich.

Die Energie zum Betreiben der Kohlendioxid-Abscheideeinrichtung einer fossilbefeuerten Kraftwerksanlage wird in der Regel durch Dampf bereit gestellt, der z.B. aus dem Kessel einer Dampfkraftwerksanlage oder dem Abhitzedampferzeuger einer Gas- und Dampfturbinenkraftwerksanlage entnommen wird. Da durch den deutlich effizienteren Betrieb der Kohlendioxid-Abscheideeinrichtung eine Einsparung dieses Dampfes erreicht wird, erhöht sich der Wirkungsgrad der Kraftwerksanlage.

Die Erfindung zum Abtrennen von Kohlendioxid aus einem Abgas einer fossilbefeuerten Kraftwerksanlage durch eine mehrstufige Absorption ermöglicht somit gegenüber dem Stand der Technik einen wesentlichen kostengünstigeren Betrieb einer Kohlendioxid-Abscheideeinrichtung. Die Erfindung ermöglicht zudem die nachträgliche Installation einer Kohlendioxid-Abscheideeinrichtung unter Erfüllung ökonomischer Bedingungen.

In einer vorteilhaften Weiterbildung des Kohlendioxid-Abtrennungsverfahrens wird in einem Desorptionsprozess von dem beladenem Absorptionsmedium gasförmiges Kohlendioxid abgegeben. Dabei wird ein regeneriertes Absorptionsmedium gebildet. Durch die Regeneration des Absorptionsmediums in dem Desorptionsprozess ist eine Wiederverwendung des Absorptionsmediums in dem Absorptionsprozess möglich.

Vorteilhafterweise wird dabei in dem Desorptionsprozess von dem beladenen Absorptionsmedium gasförmiges Kohlendioxid thermisch ausgetrieben. Dies ermöglicht die Nutzung von Wärme, die in dem Gesamtprozess der Kraftwerksanlage anfällt. Vorzugsweise wird diese Wärme durch Dampf bereit gestellt, der z.B. aus dem Kessel einer Dampfkraftwerkesanlage oder dem Abhitzedampferzeuger einer Gas- und Dampfturbinenkraftwerksanlage entnommen wird.

In einer weiteren vorteilhaften Ausgestaltung des Kohlendioxid-Abtrennungsverfahrens wird in dem Vorreinigungsschritt im Anschluss an den ersten Absorptionsprozess mit wenigstens einem ersten Desorptionsprozess von dem ersten beladenem Absorptionsmedium Kohlendioxid abgegeben, wobei das Absorptionsmedium zwischen dem ersten Absorptionsprozess und dem ersten Desorptionsprozess in einem ersten Kreislauf geführt wird. Ferner wird in dem Endreinigungsschritt im Anschluss an den zweiten Absorptionsprozess mit einem zweiten Desorptionsprozess von dem zweiten beladenen Absorptionsmedium gasförmiges Kohlendioxid abgegeben, wobei das Absorptionsmedium zwischen dem zweiten Absorptionsprozess und dem zweiten Desorptionsprozess in einem zweiten Kreislauf geführt wird.

Durch die Aufteilung des Kohlendioxid-Abtrennungsverfahrens in einen Vorreinigungs- und einen Endreinigungsschritt ist es möglich, den jeweiligen Desorptionsprozess auf den Kohlendioxidgehalt im Absorptionsmedium anzupassen. Je nach Ausgestaltung des Prozesses kann aber auch das Vorhandensein von einem zweiten ersten oder mehreren ersten Desorptionsprozessen von Vorteil sein. Dies ermöglicht eine optimierte Betriebsweise einer Kohlendioxid-Abscheideeinrichtung, die gegenüber einer herkömmlichen Betriebsweise im Energiebedarf reduziert ist. Die jeweiligen Desorptionsprozesse aus Vor-und Endreinigung sind dabei prozesstechnisch von einander getrennt. Vorzugsweise sind die jeweiligen Desorptionsprozesse in zumindest zwei voneinander getrennten Gehäusen angeordnet. Eine Anordnung der jeweiligen Desorptionsprozesse in einem Gehäuse ist aber möglich. Durch den ersten und zweiten Kreislauf ist eine Wiederverwendung des Absorptionsmediums möglich.

Die Vor- und Endreinigung in wenigstens zwei Schritten ermöglicht eine unterschiedliche Betriebsweise der getrennten Prozesse. So genügt für den Vorreinigungsschritt in wenigstens dem ersten Absorptionsprozess ein Absorptionsmedium, welches lediglich teilweise in wenigstens dem ersten Desorptionsprozess von Kohlendioxid befreit wurde. Dadurch wird zunächst eine Grobreinigung erzielt. Durch die nicht notwendige komplette Reinigung, bzw. Regenerierung des Absorptionsmediums wird Energie in Form von Wärme eingespart. Für den Endreinigungsprozess in dem zweiten Absorptionsprozess wird hingegen ein Absorptionsmedium benötigt, welches beispielsweise weitgehend komplett in dem zweiten Desorptionsprozess von Kohlendioxid befreit wurde, um das Abgas von dem restlichen Kohlendioxid weitgehend befreien zu können. Da dieses Absorptionsmedium nur noch eine Feinreinigung notwendig ist, muss dieses auch nur noch geringere Mengen Kohlendioxid aufnehmen. Durch die geringen Mengen an Kohlendioxid, die aus dem Absorptionsmedium ausgetrieben werden müssen, wird ebenso Energie in Form von Wärme eingespart.

In einfacher Weise kann auch in wenigstens dem ersten Kreislauf ein Absorptionsmedium verwendet werden, welches von dem Absorptionsmedium in dem zweiten Kreislauf verschieden ist. Dadurch ist eine Anpassung des Absorptionsmediums an den jeweiligen Absorptions- und Desorptionsprozess möglich. Das jeweilige Absorptionsmedium kann so z.B. hinsichtlich des Kohlendioxidgehalts im Abgas oder der Betriebstemperatur optimiert sein.

Als Absorptionsmedium wird in dem Kohlendioxid-Abtrennungsverfahren vorteilhafterweise ein Fluid vorgeschlagen. Gegenüber einem Festkörpermedium bietet ein Fluid in dem erfindungsgemäßen Verfahren erhebliche Vorteile bei der Durchleitung des Mediums in den Prozess. Flüssigkeiten, Gase, Aerosole oder Suspensionen sind dabei als Fluid geeignet. Als Flüssigkeit wird vorzugsweise die Verwendung eines verdampfbaren Lösungsmittels vorgeschlagen.

Ein besonders guter Prozessdurchlauf wird durch eine Lösung aus H₂O und Aminderivaten als Lösungsmittel erzielt. Bekannt sind beispielsweise Lösungen unter den Namen MEA (Mono-Ethanolamin) und MDEA (Methyldiethanolamin).

Bei einer besonderen Ausgestaltung des Kohlendioxid-Abtrennungsverfahrens wird in einem Wärmeübertragungsprozess Wärme von regeneriertem Absorptionsmedium aus wenigstens dem ersten Kreislauf entzogen, und an das beladene Absorptionsmedium aus wenigstens dem ersten oder dem zweiten Kreislauf abgegeben. Eine weitere Ausgestaltung sieht einen vergleichbaren Wärmeübertragungsprozess vor, bei dem Wärme von regeneriertem Absorptionsmedium aus dem zweiten Kreislauf entzogen wird, und an das beladene Absorptionsmedium aus zumindest dem ersten Kreislauf abgegeben wird. Durch diese vorgeschlagenen Wärme-übertragungsprozesse wird einerseits eine Vorwärmung des beladenen Absorptionsmediums an die Arbeitstemperatur des nachgeschalteten Desorptionsprozesses und andererseits eine Abkühlung des regenerierten Absorptionsmediums an die Arbeitstemperatur des nachgeschalteten Absorptionsprozesses erzielt. Dies erspart Heizenergie für den Desorptionsprozess sowie Energie für die Kühlung für den Absorptionsprozess.

In einer vorteilhaften Weiterbildung des Kohlendioxid-Abtrennungsverfahrens wird das durch den Desorptionsprozess abgetrennte Kohlendioxid in einem nachfolgenden Verdichterprozess komprimiert. Die Komprimierung dient der Vereinfachung der weiteren Handhabung des Kohlendioxids. Die Kompressionswärme lässt sich zudem zur Unterstützung des Desorptionsprozesses verwenden. Weiterhin ist es von Vorteil, das komprimierte Kohlendioxid zu speichern.

In einer besonderen Ausgestaltung kommt das Kohlendioxid-Abtrennungsverfahren bei einem fossilbefeuerten Dampfkraftwerk zur Anwendung.

In einer anderen besonderen Ausgestaltung kommt das Kohlendioxid-Abtrennungsverfahren bei einer kombinierten Gas- und Dampfturbinen-Kraftwerksanlage zur Anwendung.

Die auf eine fossilbefeuerte Kraftwerksanlage gerichtete Aufgabe ist erfindungsgemäß gelöst mit einer einer Verbrennungsvorrichtung nachgeschalteten und von einem kohlendioxidhaltigen Abgas durchströmbaren Abscheidevorrichtung für Kohlendioxid, umfassend eine Absorptionsvorrichtung zur Aufnahme von Kohlendioxid aus dem Abgas, dadurch gekennzeichnet, dass die Absorptionsvorrichtung eine erste Absorptionseinheit zur Vorreinigung des kohlendioxidhaltigen Abgases, und eine zweite Absorptionseinheit zur Endreinigung des kohlendioxidhaltigen Abgases aufweist, wobei die zweite Absorptionseinheit in Strömungsrichtung des Abgases der ersten Absorptionseinheit nachgeschaltet ist.

Dabei geht die auf eine fossilbefeuerte Kraftwerksanlage gerichtete Erfindung von der Überlegung aus, dass die Absorptionsvorrichtung die Bestandteil der der Verbrennungsvorrichtung nachgeschalteten Abscheidevorrichtung ist, eine erste Absorptionseinheit zur Vorreinigung und eine zweite Absorptionseinheit zur Endreinigung des kohlendioxidhaltigen Abgases aufweist. In der ersten Absorptionseinheit wird das kohlendioxidhaltige Abgas mit einem Absorptionsmedium in Kontakt gebracht, wobei Kohlendioxid von dem Absorptionsmedium aufgenommen wird. Dadurch werden ein erstes beladenes Absorptionsmedium und ein vorgereinigtes Abgas gebildet. Das vorgereinigte Abgas ist dabei zunächst teilweise von Kohlendioxid befreit. In der zweiten Absorptionseinheit, die der ersten Absorptionseinheit nachgeschaltet ist, wird das vorgereinigte Abgas mit einem zweiten Absorptionsmedium in Kontakt gebracht, wobei Kohlendioxid von dem Absorptionsmedium aufgenommen wird. Dadurch werden ein zweites beladenes Absorptionsmedium und ein endgereinigtes Abgas gebildet. Das endgereinigte Abgas ist weitgehend von Kohlendioxid befreit. Das beladene Absorptionsmedium aus der ersten und der zweiten Absorptionseinheit sowie das weitgehend von Kohlendioxid befreite Abgas kann nun einer weiteren Verwendung zugeführt werden.

Die Erfindung sieht dabei eine Vorreinigung mit wenigstens einer ersten Absorptionseinheit vor. Je nach Ausgestaltung der Absorptionsvorrichtung kann aber auch von Vorteil sein, eine zweite erste oder mehreren erste Absorptionseinheiten vorzusehen. Durch die Aufteilung der Absorptionsvorrichtung in eine Absorptionseinheit für die Vorreinigung und eine Absorptionseinheit für die Endreinigung ist eine Anpassung der jeweiligen Absorptionseinheit auf den Kohlendioxidgehalt im Abgas erreichbar. Dadurch ist eine wesentlich effizientere Betriebsweise einer Kohlendioxid-Abscheideeinrichtung möglich, die gegenüber einer herkömmlichen Gasreinigungsvorrichtung im Energiebedarf reduziert ist. Die jeweiligen Absorptionseinheiten für Vor- und Endreinigung sind dabei räumlich von einander getrennt, und lediglich durch eine Abgasleitung verbunden. Die Anordnung der Absorptionseinheiten in einem Gehäuse ist aber möglich.

Durch die wesentlich effizientere Betriebsweise der Kohlendioxid-Abscheideeinrichtung einer fossilbefeuerten Kraftwerksanlage wird zudem wertvoller Heißdampf eingespart, welcher aus dem Kessel einer Dampfkraftwerksanlage oder einem Abhitzedampferzeuger einer Gas- und Dampfturbinenkraftwerksanlage entnommen wird, und üblicherweise zum Betrieb der Kohlendioxid-Abscheideeinrichtung notwendig ist. Durch die Einsparung kann dieser Heißdampf für die Erzeugung von Energie verwendet werden, wodurch sich der Wirkungsgrad der fossilbefeuerten Kraftwerksanlage erhöht.

Die Erfindung zum Antrennen von Kohlendioxid aus einem Abgas einer fossilbefeuerten Kraftwerksanlage mit mehreren hintereinandergeschalteten Absorptionseinheiten ermöglicht somit gegenüber dem Stand der Technik einen wesentlichen kostengünstigeren Betrieb einer Kohlendioxid-Abscheideeinrichtung. Durch die Erfindung ist zudem die nachträgliche Installation einer Kohlendioxid-Abscheideeinrichtung unter Erfüllung ökonomischer Bedingungen möglich.

In einer vorteilhaften Ausgestaltung der fossilbefeuerten Kraftwerksanlage ist die Absorptionsvorrichtung als Kolonne oder Säule für die Durchleitung eines Absorptionsmediums ausgestaltet. Absorptionskolonnen sind für die unterschiedlichsten Anwendungen im industriellen Bereich verfügbar. Eine säulenförmige Anordnung der Absorptionsvorrichtung ist dabei platzsparend und prozessunterstützend.

Vorteilhaft ist eine Ausgestaltung der Absorptionsvorrichtung der fossilbefeuerten Kraftwerksanlage, bei der das kohlendioxidhaltige Abgas dem Absorptionsmedium für die Aufnahme von Kohlendioxid entgegenströmend leitbar ist. Das Absorptionsmedium wird dabei beispielsweise im oberen Bereich der Absorptionseinheit eingeleitet und in dem unteren Bereich wieder ausgeleitet. Das kohlendioxidhaltige Abgas wird im Gegenzug im Unteren Bereich der Absorptionseinheit eingeleitet und im oberen Bereich ausgeleitet. Durch diese Art der Strömungsführung kommt das Absorptionsmedium im oberen Bereich, wo es noch relativ frei von Kohlendioxid ist, mit dem Abgas in Kontakt, welches bereits im unteren Bereich Kohlendioxid abgegeben hat und nun nur noch geringer mit Kohlendioxid belastet ist. Das Absorptionsmedium kann dadurch dem kohlendioxidhaltigen Abgas weiteres Kohlendioxid entziehen. Wird das Absorptionsmedium in den unteren Bereich der Absorptionseinheit geleitet, wo es bereits teilweise mit Kohlendioxid beladen ist, kommt es mit Abgas in Kontakt, welches noch mit hohen Mengen an Kohlendioxid belastet ist. Das bereits teilweise mit Kohlendioxid beladene Absorptionsmedium kann dem kohlendioxidhaltigen Abgas hier bereits einen Teil des Kohlendioxids entziehen.

In einer vorteilhaften Weiterbildung der fossilbefeuerten Kraftwerksanlage ist der Absorptionsvorrichtung eine Desorptionsvorrichtung zur Abgabe von Kohlendioxid nachgeschaltet, welche über eine jeweilige Leitung zu- und ableitend mit der Absorptionsvorrichtung verbunden ist, und so einen Kreislauf für das Absorptionsmedium bildet. In der Desorptionsvorrichtung wird von dem beladenem Absorptionsmedium gasförmiges Kohlendioxid abgegeben. Dabei wird ein regeneriertes Absorptionsmedium gebildet. Durch die Regeneration des Absorptionsmediums in der Desorptionsvorrichtung ist eine Wiederverwendung des Absorptionsmediums in der Absorptionsvorrichtung möglich.

Wie bereits für die Absorptionsvorrichtung vorgeschlagen, ist es auch von Vorteil die Desorptionsvorrichtung als Kolonne oder Säule für die Durchleitung des Absorptionsmediums auszugestalten.

Vorteilhafterweise weist die der Absorptionsvorrichtung nachgeschalteten Desorptionsvorrichtung wenigstens eine erste Desorptionseinheit auf, die mit wenigstens der ersten Absorptionseinheit über eine jeweilige Leitung zu- und ableitend verbunden ist, so dass wenigstens ein erster Kreislauf für das Absorptionsmedium gebildet ist. Ebenso Vorteilhaft weist die der Absorptionsvorrichtung nachgeschalteten Desorptionsvorrichtung eine zweite Desorptionseinheit auf, die mit der zweiten Absorptionseinheit über eine jeweilige Leitung zu-und ableitend verbunden ist, so dass ein zweiter Kreislauf für das Absorptionsmedium gebildet ist.

Durch die Aufteilung der Absorptions- und Desorptionsvorrichtung in eine zumindest eine erste und eine zweite Einheit ist es möglich, die jeweilige Absorptions- bzw. Desorptionseinheit auf den Kohlendioxidgehalt im Absorptionsmedium anzupassen. Je nach Ausgestaltung der Abscheidevorrichtung kann aber auch das Vorhandensein von einer zweiten ersten oder mehreren ersten Desorptionseinheiten von Vorteil sein. Dies ermöglicht einen wesentlich effizienteren Betrieb einer Abscheidevorrichtung für Kohlendioxid, die gegenüber einer herkömmlichen Gasreinigungsvorrichtung im Energiebedarf reduziert ist.

Die jeweilige Desorptionseinheit für Vor- und Endreinigung sind dabei in ihrer Anordnung räumlich von einander getrennt. Vorzugsweise sind die jeweiligen Desorptionseinheiten in zumindest zwei voneinander getrennten Gehäusen angeordnet. Eine Anordnung der jeweiligen Desorptionseinheiten in einem Gehäuse ist aber möglich. Durch den ersten und zweiten Kreislauf ist eine Wiederverwendung des Absorptionsmediums möglich. Außerdem gestattet die Vor- und Endreinigung in wenigstens zwei voneinander getrennten Einheiten eine unterschiedliche Betriebsweise. So genügt für die Vorreinigung in wenigstens der ersten Absorptionseinheit ein Absorptionsmedium, welches lediglich teilweise in wenigstens der ersten Desorptionseinheit von Kohlendioxid befreit wurde. Dadurch wird zunächst eine Grobreinigung erzielt. Durch die nicht notwendige komplette Reinigung, bzw. Regenerierung des Absorptionsmediums wird Energie in Form von Wärme eingespart. Für die Endreinigung in der zweiten Absorptionseinheit wird beispielsweise ein Absorptionsmedium benötigt, welches weitgehend komplett in der zweiten Desorptionseinheit von Kohlendioxid befreit wurde, um das Abgas von dem restlichen Kohlendioxid weitgehend befreien zu können. Dieses Absorptionsmedium muss nur noch geringere Mengen Kohlendioxid aufnehmen. Durch die geringen Mengen an Kohlendioxid, die aus dem Absorptionsmedium ausgetrieben werden müssen, wird Energie eingespart, die hier in Form von Wärme bereitgestellt wird.

In einer vorteilhaften Weiterbildung der fossilbefeuerten Kraftwerksanlage ist ein Wärmeübertrager vorgesehen, welcher primär zuleitend mit wenigstens der ersten Desorptionseinheit und primär ableitend mit wenigstens der ersten Absorptionseinheit verbunden ist, und der sekundär zuleitend mit wenigstens der ersten Absorptionseinheit und sekundär ableitend mit wenigstens der ersten Desorptionseinheit verbunden ist. Der Wärmeübertrager ist somit in den ersten Kreislauf verschaltet. Vorteilhafterweise ist auch in den zweiten Kreislauf ein Wärmeübertrager verschaltet, der primär zuleitend mit der zweiten Desorptionseinheit und primär ableitend mit der zweiten Absorptionseinheit verbunden ist, und sekundär zuleitend mit der zweiten Absorptionseinheit und sekundär ableitend mit der zweiten Desorptionseinheit verbunden ist. Durch die primäre zuleitende Verbindung mit der jeweiligen Desorptionseinheit wird dem in der Verbindung geführten regenerierten Absorptionsmedium Wärme entzogen und an das in der sekundär ableitenden Verbindung geführte beladene Absorptionsmedium abgegeben. Durch die vorgeschlagenen Wärmeübertrager wird einerseits eine Vorwärmung des beladenen Absorptionsmediums an die Arbeitstemperatur der nachgeschalteten Desorptionseinheit und andererseits eine Abkühlung des regenerierten Absorptionsmediums an die Arbeitstemperatur der nachgeschalteten Absorptionseinheit erzielt. Dies spart Heizenergie für das Absorptionsmedium in der Desorptionseinheit sowie Energie für die Kühlung des Absorptionsmediums in der Absorptionseinheit.

In einer besonderen Ausgestaltung der fossilbefeuerten Kraftwerksanlage umfasst die Desorptionsvorrichtung eine Heizvorrichtung für das Absorptionsmedium, so dass Kohlendioxid aus dem Absorptionsmedium thermisch austreibbar ist. So kann die Heizvorrichtung die im Gesamtprozess der Kraftwerksanlage abfallende Wärme verwenden.

Vorzugsweise ist zur Übertragung von Wärme in die Heizvorrichtung ein Wärmeübertrager primärseitig mit einer Dampfleitung und sekundärseitig mit der Desorptionsvorrichtung verbunden. Dadurch kann die Desorptionsvorrichtung auch ohne zusätzlich abfallende Wärme aus dem Gesamtprozess der Kraftwerksanlage betrieben werden. Die ist zum Beispiel beim An-oder Abfahren der Abscheideeinrichtung von Bedeutung. Hierdurch wird der An- bzw. Abfahrvorgang unterstützt, wobei eine besonders effiziente Nutzung der Wärme vorgesehen ist.

In einer besonders vorteilhaften Ausgestaltung der fossilbefeuerten Kraftwerksanlage, ist der erste Kreislauf für die Durchströmung eines ersten Absorptionsmediums ausgelegt, und der zweite Kreislauf für die Durchströmung eines zweiten Absorptionsmediums ausgelegt ist. Bei mehreren ersten Kreisläufen sind dementsprechend mehrere erste Absorptionsmedien vorgesehen. Dadurch ist eine Anpassung des jeweiligen Absorptionsmediums an die jeweilige Absorptions- bzw. Desorptionseinheit möglich. Das jeweilige Absorptionsmedium kann so z.B. hinsichtlich des Kohlendioxidgehaltes im Abgas oder der Betriebstemperatur optimiert sein.

Zweckmäßigerweise ist die fossilbefeuerte Kraftwerksanlage derart ausgestaltet, dass die Abscheidevorrichtung mit einem für die Aufnahme von Kohlendioxid geeigneten Absorptionsmedium, insbesondere einem Waschmittel für Kohlendioxid, betreibbar ist. Als Waschmittel wird dabei ein Fluid bevorzugt. Gegenüber einem Feststoff bietet ein Fluid erhebliche Vorteile bei der Durchleitung. Flüssigkeiten, Gase, Aerosole oder Suspensionen sind dabei als Fluid geeignet. Als Flüssigkeit wird vorzugsweise die Verwendung eines verdampfbaren Lösungsmittels vorgeschlagen. Besonders vorteilhaft ist die Verwendung aus einer Lösung aus H₂O und Aminderivaten als Waschmittel. Bekannt sind beispielsweise Lösungen unter den Namen MEA (Mono-Ethanolamin) und MDEA (Methyldiethanolamin).

Bevorzugt ist die fossilbefeuerte Kraftwerksanlage als Dampfkraftwerk ausgestaltet, die einen befeuerten Kessel und eine Dampfturbine umfasst.

In einer weiteren bevorzugten Form, ist die fossilbefeuerte Kraftwerksanlage als Gas- und Dampfturbinenanlage ausgestaltet, die eine Gasturbine und einen der Gasturbine abgasseitig nachgeschalteten Abhitzedampferzeuger, der in dem Wasser-Dampf-Kreislauf einer Dampfturbine geschaltet ist, umfasst.

Weitere Vorteile der fossilbefeuerten Kraftwerksanlage ergeben sich in analoger Weise aus den entsprechenden Weiterbildungen des voranbeschriebenen Kohlendioxid-Abtrennungsverfahrens.

Nachfolgend werden Ausführungsbeispiele der Erfindung anhand der beigefügten schematischen Zeichnungen näher erläutert. Es zeigt:
- FIG 1: ein Ausführungsbeispiel eines Kohlendioxid-Abtrennungsverfahrens einer fossilbefeuerten Kraftwerksanlage.
- FIG 2: ein Ausführungsbeispiel einer fossilbefeuerten Kraftwerksanlage mit einer Kohlendioxid-Abscheidevorrichtung.

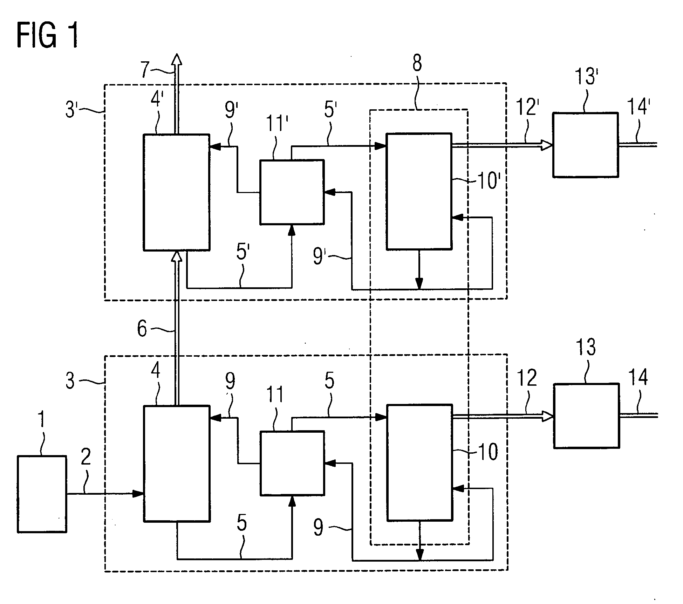

Das in FIG 1 dargestellte Kohlendioxid-Abtrennungsverfahren umfasst einen Verbrennungsprozess 1, einen Vorreinigungsschritt 3 und einen Endreinigungsschritt 3'.

Das in dem Verbrennungsprozess entstehende kohlendioxidhaltige Abgas 2 wird zunächst einem Vorreinigungsschritt 3 zugeführt und einem ersten Absorptionsprozess 4 zugeführt. In dem ersten Absorptionsprozess 4 wird Kohlendioxid aus dem kohlendioxidhaltigen Abgas 2 durch ein erstes regeneriertes Absorptionsmedium 9 aufgenommen. Den Absorptionsprozess 4 verlassen ein erstes beladenes Absorptionsmedium 5, sowie ein vorgereinigte Abgas 6.

Dem ersten beladenen Absorptionsmedium 5 wird in einem ersten Wärmeübertragungsprozess 11 Wärme entzogen. Anschließend wird es in einen Desorptionsprozess 8 geführt, wo es in einen ersten Desorptionsprozess 10 eingeleitet wird. In dem ersten Desorptionsprozess 10 wird Kohlendioxid von dem ersten beladenen Absorptionsmedium 5 abgegeben. Aus dem ersten Desorptionsprozess 10 werden das erste regeneriertes Absorptionsmedium 9 und ein erstes abgetrenntes Kohlendioxid 12 ausgeleitet. Das erste abgetrennte Kohlendioxid 12 wird in einem ersten Komprimierungsprozess 13 komprimiert und als ein erstes komprimiertes Kohlendioxid 14 ausgeleitet. Das erste regenerierte Absorptionsmedium 9 wird in einem ersten Wärmeübertragungsprozess 11 erwärmt und wieder dem ersten Absorptionsprozess 4 zugeführt. Somit wird in dem Vorreinigungsschritt 3 das Absorptionsmedium 9 in einem Kreislauf geführt, wobei das erste beladene Absorptionsmedium 5 regeneriert wird und als das erstes regeneriertes Absorptionsmedium 9 wieder dem Absorptionsprozess zugeführt wird.

Weiterhin wird in einem Endreinigungsschritt 3', analog zum Vorreinigungsschritt 3, das vorgereinigte Abgas 6 in einen Absorptionsprozess 4' geleitet. In dem Absorptionsprozess 4' wird Kohlendioxid aus dem vorgereinigten Abgas 6 durch ein zweites regeneriertes Absorptionsmedium 9' aufgenommen. Den Absorptionsprozess 4' verlassen ein zweites beladenes Absorptionsmedium 5' sowie ein von Kohlendioxid befreites Abgas 7.

Dem zweiten beladenen Absorptionsmedium 5' wird in einen zweiten Wärmeübertragungsprozess 11' Wärme entzogen. Anschließend wird das zweite beladene Absorptionsmedium 5' in den Desorptionsprozess 8 geführt, wo es in einen zweiten Desorptionsprozess 10' eingeleitet wird. In dem zweiten Desorptionsprozess 10' wird Kohlendioxid von dem zweiten beladenen Absorptionsmedium 5' abgegeben. Aus dem zweiten Desorptionsprozess 10' werden das zweite regenerierte Absorptionsmedium 9' und ein zweites abgetrenntes Kohlendioxid 12' ausgeleitet. Das zweite abgetrennte Kohlendioxid 12' wird in einem zweiten Komprimierungsprozess 13' komprimiert und als ein zweites komprimiertes Kohlendioxid 14' ausgeleitet. Das zweite regenerierte Absorptionsmedium 9' wird in dem zweiten Wärmeübertragungsprozess 11' erwärmt und wieder dem zweiten Absorptionsprozess 4' zugeführt. Somit wird in dem Endreinigungsschritt 3' das Absorptionsmedium 9' in einem Kreislauf geführt, wobei das zweite beladene Absorptionsmedium 5' regeneriert wird und als das zweite regenerierte Absorptionsmedium 9' wieder dem Absorptionsprozess zugeführt wird.

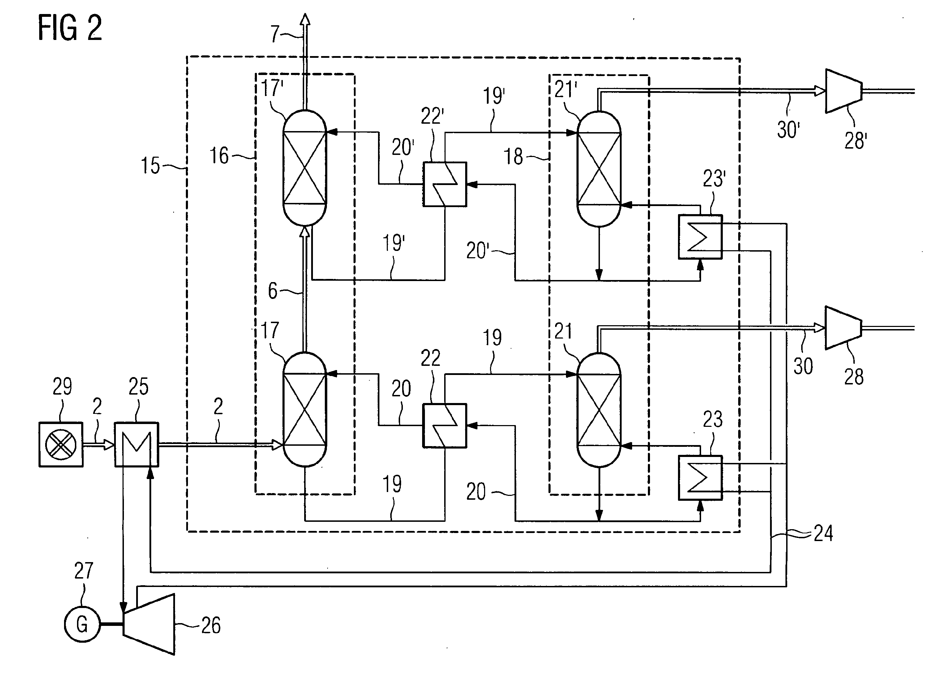

Die in FIG 2 dargestellte fossilbefeuerte Kraftwerksanlage umfasst eine der Verbrennungsvorrichtung 29 nachgeschalteten Abscheidevorrichtung 15. Die Abscheidevorrichtung 15 umfasst eine Absorptionsvorrichtung 16 und eine Desorptionsvorrichtung 18.

Die Verbrennungsvorrichtung 29 ist zur Leitung eines kohlendioxidhaltigen Abgases 2 mit einem befeuerten Kessel 25 verbunden. Der befeuerte Kessel 25 ist darüber hinaus zur Leitung von Dampf mit einer Dampfturbine 26 verbunden, die wiederum einen Generator 27 zur Energieerzeugung antreibt. Ferner ist der befeuerte Kessel 25 zur Leitung des kohlendioxidhaltigen Abgases 2 mit einer ersten Absorptionseinheit 17 verbunden, die Bestandteil der Absorptionsvorrichtung 16 ist. Die erste Absorptionseinheit 17 ist zuführend mit einer ersten Leitung für regeneriertes Absorptionsmedium 20 mit einem ersten Wärmeübertrager 22 verbunden, mit einer ersten Leitung für beladenes Absorptionsmedium 19 abführend mit dem ersten Wärmeübertrager 22, und zur Leitung eines vorgereinigten Abgases 6 mit der einer zweiten Absorptionseinheit 17' verbunden.

Der erste Wärmeübertrager 22 ist mit einer ersten Desorptionseinheit 21 der Desorptionsvorrichtung 18 zur Leitung des beladenen Absorptionsmediums 19 zuleitend verbunden. Ableitend ist die erste Desorptionseinheit 21 mit einem Kompressor 28 zur Leitung von abgetrenntem Kohlendioxid 30 verbunden. Außerdem ist die erste Desorptionseinheit 21 mit dem ersten Wärmeübertrager 22 verbunden. Der erste Wärmeübertrager 22 ist mit der Absorptionseinheit 17 der Absorptionsvorrichtung 16 zur Leitung des regenerierten Absorptionsmediums 20 verbunden. Der Wärmeübertrager 23 ist über eine Dampfleitung 24 mit dem befeuerten Kessel 25 und der Dampfturbine 26 verbunden.

In analoger Weise zur ersten Absorptionseinheit 17, ist die zweite Absorptionseinheit 17' mit dem zweiten Wärmeübertrager 22' zur Leitung eines regenerierten Absorptionsmediums 20' verbunden, mit dem zweiten Wärmeübertrager 22' zur Leitung eines beladenen Absorptionsmediums 19' verbunden und weist eine Leitung zur Austragung eines endgereinigten Abgases 7 auf.

Der zweite Wärmeübertrager 22' ist mit einer zweiten Desorptionseinheit 21' der Desorptionsvorrichtung 18 zur Leitung des beladenen Absorptionsmediums 19' verbunden. Ableitend ist die zweite Desorptionseinheit 21' mit einem Kompressor 28' zur Leitung von abgetrenntem Kohlendioxid 30' verbunden. Weiterhin ist die zweite Desorptionseinheit 21' mit dem zweiten Wärmeübertrager 22' verbunden. Der zweite Wärmeübertrager 22' ist mit der Absorptionsvorrichtung 17' der Absorptionsvorrichtung 16 zur Leitung des regenerierten Absorptionsmediums 20' verbunden. Der Wärmeübertrager 23' ist über eine Dampfleitung 24 mit dem befeuerten Kessel 25 und der Dampfturbine 26 verbunden.

Durch die Erfindung ist der Betrieb eines kohlendioxidfreien Kraftwerks mit hoher Effizienz möglich. Dabei wird zur Abtrennung von Kohlendioxid aus einem Rauchgas einer fossilbefeuerten Kraftwerksanlage Kohlendioxid in mehreren Stufen abgetrennt, wobei jede Abtrennungsstufe auf den jeweiligen Gehalt an Kohlendioxid angepasst ist. Die Vorrichtung zum Abtrennen von Kohlendioxid aus einem Rauchgas ist Bestandteil der fossilbefeuerten Kraftwerksanlage. Durch die integrierte schaltungstechnische Verbesserung ist eine wesentliche Effizienzsteigerung gegenüber einer herkömmlichen Gasreinigungseinrichtung einer fossilbefeuerten Kraftwerksanlage erzielbar.

## Patentansprüche

1. Verfahren zum Abtrennen von Kohlendioxid aus einem Abgas einer fossilbefeuerten Kraftwerksanlage, bei dem
a) in einem Verbrennungsprozess (1) ein fossiler Brennstoff verbrannt wird, wobei ein kohlendioxidhaltiges Abgas (2) erzeugt wird,
b) in einem Vorreinigungsschritt (3) mit wenigstens einem ersten Absorptionsprozess (4) das kohlendioxidhaltige Abgas (2) mit einem ersten Absorptionsmedium in Kontakt gebracht wird, wobei Kohlendioxid von dem Absorptionsmedium aufgenommen wird, wobei ein erstes beladenes Absorptionsmedium (5) und ein vorgereinigtes Abgas (6) gebildet wird, das teilweise von Kohlendioxid befreit ist,
c) in einem Endreinigungsschritt (3') mit einem zweiten Absorptionsprozess (4') das im Vorreinigungsschritt (3) vorgereinigte Abgas (6) mit einem zweiten Absorptionsmedium in Kontakt gebracht wird, wobei Kohlendioxid von dem Absorptionsmedium aufgenommen wird, wobei ein zweites beladenes Absorptionsmedium (5') und ein gereinigtes Abgas (7) gebildet wird, das von Kohlendioxid weitgehend befreit ist.

2. Verfahren nach Anspruch 1, bei dem in einem Desorptionsprozess (8) von dem beladenem Absorptionsmedium (5, 5') gasförmiges Kohlendioxid abgegeben wird, wobei regeneriertes Absorptionsmedium (9, 9') gebildet wird.

3. Verfahren nach Anspruch 2, bei dem in dem Desorptionsprozess (8) von dem beladenen Absorptionsmedium (5, 5'), gasförmiges Kohlendioxid thermisch ausgetrieben wird.

4. Verfahren nach einem der Ansprüche 1 bis 3, bei dem
a) in dem Vorreinigungsschritt (3) im Anschluss an wenigstens den ersten Absorptionsprozess (4) mit wenigstens einem ersten Desorptionsprozess (10) von dem ersten beladenem Absorptionsmedium (5) gasförmiges Kohlendioxid abgegeben wird, wobei das Absorptionsmedium (5, 9) zwischen dem ersten Absorptionsprozess (4) und dem ersten Desorptionsprozess (10) in einem ersten Kreislauf geführt wird,
b) in dem Endreinigungsschritt (3') im Anschluss an den zweiten Absorptionsprozess (4') mit einem zweiten Desorptionsprozess (10') von dem zweiten beladenen Absorptionsmedium (5') gasförmiges Kohlendioxid abgegeben wird, wobei das Absorptionsmedium (5', 9') zwischen dem zweiten Absorptionsprozess (4') und dem zweiten Desorptionsprozess (10') in einem zweiten Kreislauf geführt wird.

5. Verfahren nach Anspruch 4, bei dem in wenigstens dem ersten Kreislauf ein Absorptionsmedium (5, 9) verwendet wird, welches von dem Absorptionsmedium (5', 9') in dem zweiten Kreislauf verschieden ist.

6. Verfahren nach Anspruch 1 bis 5, wobei ein Fluid als Absorptionsmedium (5, 5', 9, 9') verwendet wird.

7. Verfahren nach Anspruch 6, wobei eine Flüssigkeit, ein Gas, ein Aerosol oder eine Suspension als Fluid verwendet wird.

8. Verfahren nach Anspruch 7, wobei ein verdampfbares Lösungsmittel als Flüssigkeit verwendet wird.

9. Verfahren nach Anspruch 8, wobei eine Lösung aus H₂O und Aminderivaten als Lösungsmittel verwendet wird.

10. Verfahren nach einem der Ansprüche 4 bis 9, bei dem in einem Wärmeübertragungsprozess (11) Wärme von dem regenerierten Absorptionsmedium (9) aus wenigstens dem ersten Kreislauf entzogen wird, und an beladenes Absorptionsmedium (5, 5') aus wenigstens dem ersten oder dem zweiten Kreislauf abgegeben wird.

11. Verfahren nach einem der Ansprüche 4 bis 9, bei dem in einem Wärmeübertragungsprozess (11') Wärme von dem regenerierten Absorptionsmedium (9') aus dem zweiten Kreislauf entzogen wird, und an beladenes Absorptionsmedium (5, 5') aus wenigstens dem ersten oder den zweiten Kreislauf abgegeben wird.

12. Verfahren nach einem der Ansprüche 2 bis 11, bei dem das aus dem Abgas (2) abgetrennte Kohlendioxid (12, 12') komprimiert wird.

13. Verfahren nach Anspruch 12, bei dem das komprimierte Kohlendioxid (14, 14') gespeichert wird.

14. Verfahren nach einem der vorhergehenden Ansprüche, **gekennzeichnet durch** eine Anwendung bei einem fossilbefeuerten Dampfkraftwerk.

15. Verfahren nach einem der Ansprüche 1 bis 14, **gekennzeichnet durch** eine Anwendung bei einer kombinierten Gas- und Dampfturbinen-Kraftwerksanlage.

16. Fossilbefeuerte Kraftwerksanlage mit einer einer Verbrennungsvorrichtung (29) nachgeschalteten und von einem kohlendioxidhaltigen Abgas (2) durchströmbaren Abscheidevorrichtung (15) für Kohlendioxid, umfassend eine Absorptionsvorrichtung (16) zur Aufnahme von Kohlendioxid aus dem Abgas (2),
**dadurch gekennzeichnet, dass** die Absorptionsvorrichtung (16) eine erste Absorptionseinheit (17) zur Vorreinigung des kohlendioxidhaltigen Abgases (2), und eine zweite Absorptionseinheit (17') zur Endreinigung eines vorgereinigten kohlendioxidhaltigen Abgases (6) aufweist, wobei die zweite Absorptionseinheit (17') in Strömungsrichtung des Abgases (2, 6) der ersten Absorptionseinheit (17) nachgeschaltet ist.

17. Fossilbefeuerte Kraftwerksanlage nach Anspruch 16, **dadurch gekennzeichnet, dass** die Absorptionsvorrichtung (16) als Kolonne oder Säule für die Durchleitung eines Absorptionsmediums ausgestaltet ist.

18. Fossilbefeuerte Kraftwerksanlage nach Anspruch 17, **dadurch gekennzeichnet, dass** die Absorptionsvorrichtung (16) derart ausgestaltet ist, dass das kohlendioxidhaltige Abgas dem Absorptionsmedium für die Aufnahme von Kohlendioxid entgegenströmend leitbar ist.

19. Fossilbefeuerte Kraftwerksanlage nach einem der Ansprüche 16 bis 18, **dadurch gekennzeichnet, dass** der Absorptionsvorrichtung (16) eine Desorptionsvorrichtung (18) zur derart nachgeschaltet ist, dass die Desorptionsvorrichtung (18) über eine jeweilige Leitung (19, 19', 20, 20') zu- und ableitend mit der Absorptionsvorrichtung verbunden ist, so dass ein Kreislauf für das Absorptionsmedium gebildet ist.

20. Fossilbefeuerte Kraftwerksanlage nach Anspruch 19, **dadurch gekennzeichnet, dass** die Desorptionsvorrichtung (20) als Kolonne oder Säule für die Durchleitung des Absorptionsmediums ausgestaltet ist.

21. Fossilbefeuerte Kraftwerksanlage nach einem der Ansprüche 19 bis 20, **dadurch gekennzeichnet, dass** die der Absorptionsvorrichtung (16) nachgeschaltete Desorptionsvorrichtung (18) aus wenigstens einer ersten Desorptionseinheit (21) besteht, die mit wenigstens der ersten Absorptionseinheit (17) über eine jeweilige Leitung (19, 20) zu- und ableitend verbunden ist, so dass wenigstens ein erster Kreislauf für das Absorptionsmedium gebildet ist.

22. Fossilbefeuerte Kraftwerksanlage nach Anspruch 21, **dadurch gekennzeichnet, dass** ein Wärmeübertrager (22) primär zuleitend mit wenigstens der ersten Desorptionseinheit (21) und primär ableitend mit wenigstens der ersten Absorptionseinheit (17) verbunden ist, und der sekundär zuleitend mit wenigstens der ersten Absorptionseinheit (17) und sekundär ableitend mit wenigstens der ersten Desorptionseinheit (21) verbunden ist.

23. Fossilbefeuerte Kraftwerksanlage nach Anspruch 21 oder 22, **dadurch gekennzeichnet, dass** die der Absorptionsvorrichtung (16) nachgeschaltete Desorptionsvorrichtung (18) eine zweite Desorptionseinheit (21') aufweist, die mit der zweiten Absorptionseinheit (17') über eine jeweilige Leitung (19', 20') zu- und ableitend verbunden ist, so dass ein zweiter Kreislauf für das Absorptionsmedium gebildet ist.

24. Fossilbefeuerte Kraftwerksanlage nach Anspruch 23, **dadurch gekennzeichnet, dass** ein Wärmeübertrager (22') der primär zuleitend mit der zweiten Desorptionseinheit (21') und primär ableitend mit der zweiten Absorptionseinheit (17') verbunden ist, und sekundär zuleitend mit der zweiten Absorptionseinheit (17') und sekundär ableitend mit der zweiten Desorptionseinheit (21') verbunden ist.

25. Fossilbefeuerte Kraftwerksanlage nach Anspruch 19 oder 24, **dadurch gekennzeichnet, dass** die Desorptionsvorrichtung (18) eine Heizvorrichtung für das Absorptionsmedium umfasst, so dass Kohlendioxid aus dem Absorptionsmedium thermisch austreibbar ist.

26. Fossilbefeuerte Kraftwerksanlage nach einem der Ansprüche 19 bis 25, **dadurch gekennzeichnet, dass** zur Übertragung von Wärme in den Kreislauf ein Wärmeübertrager (23, 23') primärseitig mit einer Dampfleitung (24) und sekundärseitig mit der Desorptionsvorrichtung (21, 21') verbunden ist.

27. Fossilbefeuerte Kraftwerksanlage nach einem der Ansprüche 21 bis 26, **dadurch gekennzeichnet, dass** der erste Kreislauf für die Durchströmung eines ersten Absorptionsmediums ausgelegt ist, und der zweite Kreislauf für die Durchströmung eines zweiten Absorptionsmediums ausgelegt ist.

28. Fossilbefeuerte Kraftwerksanlage nach einem der Ansprüche 19 bis 27, **dadurch gekennzeichnet, dass** die Absorptionsvorrichtung (16) mehrere erste Absorptionseinheiten zur Vorreinigung des kohlendioxidhaltigen Abgases (2) umfasst, und dass die Desorptionsvorrichtung (18) mehrere Desorptionseinheiten zur Abgabe von Kohlendioxid umfasst, wobei jede Absorptionseinheit mit einer Desorptionseinheit verbunden ist, so dass mehrere Kreisläufe für Absorptionsmedium gebildet ist.

29. Fossilbefeuerte Kraftwerksanlage nach einem der Ansprüche 16 bis 28, **dadurch gekennzeichnet, dass** die Abscheidevorrichtung (15) derart ausgestaltet ist, dass diese mit einem für die Aufnahme von Kohlendioxid geeigneten Absorptionsmedium, insbesondere einem Waschmittel für Kohlendioxid, betreibbar ist.

30. Fossilbefeuerte Kraftwerksanlage nach Anspruch 29, **dadurch gekennzeichnet, dass** die Abscheidevorrichtung (15) für den Betrieb mit einer Lösung aus H₂O und Aminderivaten als Absorptionsmedium ausgestaltet ist.

31. Fossilbefeuerte Kraftwerksanlage nach einem der Ansprüche 16 bis 30, **gekennzeichnet durch** eine Ausgestaltung als Dampfkraftwerk, umfassend einen befeuerten Kessel (25) und eine Dampfturbine (26).

32. Fossilbefeuerte Kraftwerksanlage nach einem der Ansprüche 16 bis 30, **gekennzeichnet durch** eine Ausgestaltung als Gas- und Dampfturbinenanlage, umfassend eine Gasturbine und einen der Gasturbine abgasseitig nachgeschalteten Abhitzedampferzeuger, der in dem Wasser-Dampf-Kreislauf einer Dampfturbine geschaltet ist.
